# EUROPÄISCHE PATENTSCHRIFT

(11) **EP 0 963 029 B1**
(45) Veröffentlichungstag und Bekanntmachung des Hinweises auf die Patenterteilung: **09.02.2005**
(21) Anmeldenummer: 99109048.1
(22) Anmeldetag: 07.05.1999
(51) Int. Cl.: H02K 5/128, H02K 3/47, H02K 11/04

(54) **Spaltrohrpumpe mit Wicklungsträger**
Canned pump with winding support
Pompe à tube d'entrefer avec support d'enroulement

(30) Priorität: 02.06.1998 DE 19824345
(43) Veröffentlichungstag der Anmeldung: 08.12.1999
(73) Patentinhaber: WILO AG, 44263 Dortmund (DE)
(72) Erfinder: Kech, Hansjürgen, 58313 Herdecke (DE); Dreihaus, Uwe, 59067 Hamm (DE); Fabricius, Ingo, 44388 Dortmund (DE)
(74) Vertreter: COHAUSZ DAWIDOWICZ HANNIG & PARTNER

(56) Entgegenhaltungen:
- EP-A- 0 711 019
- EP-A- 0 713 282
- WO-A-97/49162
- DE-A- 4 441 378
- DE-A- 19 705 974
- US-A- 5 525 850

## Beschreibung

Die Erfindung betrifft eine Spaltrohrpumpe gemäß dem Oberbegriff des Anspruchs 1. (Siehe WO-A-9749162).

Spaltrohrpumpen werden fast ausschließlich mit Asynchronmaschinen in Drehstrom oder Wechselstrom betrieben, da Asynchronmaschinen eine hohe Fertigungsreife erreicht haben und sich durch ihre kompakte Bauweise und ihre Zuverlässigkeit ausweisen. Im kleinen und mittleren Leistungsbereich ist der Wirkungsgrad von Asynchronmaschinen jedoch ungenügend. Ebenso nachteilig ist der bei kleinen Asynchronmaschinen unverhältnismäßig große Aufwand einer Elektronik für die stufenlose Regelung des Motors. Spaltrohrmotoren haben jedoch den Vorteil, daß die elektrische Antriebsseite hermetisch mittels des Spaltrohres bzw. Spalttopfes von den rotierenden Teilen sowie dem Fördermedium getrennt ist.

Bei bekannten Spaltrohrpumpen mit Asynchronantrieb wird die Wicklung in ein isoliertes Blechpaket gewickelt und nachträglich mit dem Belchpaket auf den metallischen Spalttopf geschoben.

Bei bekannten Spaltrohrpumpen mit kommutierten Antrieb wird die Ständerwicklung direkt auf den Spalttopf bzw. das Spaltrohr aufgewickelt. (Siehe EP-A-0 711 019).

Nachteilig bei derartigen Spaltrohrpumpen ist, daß bei einem Defekt des Spalttopfes die gesamte Ständerwicklung demontiert werden muß und nicht unbedingt wieder verwendbar ist. Sofern die Ständerwicklung mit dem Spaltrohr bzw. Spalttopf verklebt oder sonstwie verbunden ist, ist bei einem Defekt der Ständerwicklung oder des Spalttopfes das jeweilige andere Bauteil mit auszuwechseln und ist nicht wiederzuverwenden.

Aufgabe der vorliegenden Erfindung ist es daher, eine gattungsmäßige Spaltrohrpumpe dahingehend weiterzuentwickeln, daß der Fertigungsaufwand verringert.

Erfindungsgemäß wird diese Aufgabe durch die Merkmale des Anspruchs 1 gelöst. Durch einen derartigen Aufbau ist es möglich, die Ständerwicklung über den schon montierten Spalttopf bzw. das montierte Spaltrohr zu schieben bzw. wieder zu entfernen, ohne daß das Spaltrohr bzw. daß der Spalttopf demontiert bzw. entfernt werden muß oder beschädigt wird. Die Ständerwicklung kann vor Montage des Wicklungsträgers auf diesen aufgebracht werden und insbesondere mit diesem verbacken werden. Hierdurch ist die Ständerwicklung durch den Wicklungsträger in Position gehalten. Der Wicklungsträger wird anschließend auf den Spalttopf aufgeschoben und wird durch Befestigungsvorrichtungen mit dem Spalttopf und/oder dem Pumpengehäuse verankert und/oder in Position gehalten. Der Wicklungsträger liegt vorteilhaft mit seiner zylindrischen Innenfläche an der zylindrischen Außenfläche des Spaltrohres oder Spalttopfes an, wodurch eine thermische Verbindung zwischen Wicklungsträger und Spaltrohr bzw. Spalttopf entsteht und die von der Ständerwicklung erzeugte Wärme über den Wicklungsträger und das Spaltrohr bzw. der Spalttopf an das Fördermedium abgegeben werden kann.

Der Wicklungsträger sollte vorteilhaft aus einem temperaturfesten Kunststoff bestehen, wodurch das Gewicht der Pumpe reduziert wird.

Sofern der antreibende Motor ein elektrisch kommutierter Motor ist, sind die Permanentmagnete zur Drehmomentübertragung von Stator auf das Pumpenlaufrad in äquidistanten Abständen um die Rotorachse angeordnet. Die Kommutierung wird durch die Elektronik vorgenommen, welche vorteilhaft ebenfalls innerhalb des Pumpengehäuses oder an diesem angeordnet ist, wobei drauf zu achten ist, daß die von der Kommutierungselektronik erzeugte Wärme über Wärmebrücken auf das Pumpengehäuse und/oder das Fördermedium übertragen wird.

Zur Erfassung der Rotorposition bzw. der Rotorgeschwindigkeit sind vorteilhaft Sensoren in die Ständerwicklung integriert, wodurch eine Kosten- und Gewichtsersparnis erzielt wird.

Nachfolgend wird anhand von Zeichnungen die Erfindung näher erläutert.

Es zeigen:
- Figur 1:: Eine Querschnittsdarstellung durch eine erfindungsgemäße Spaltrohrpumpe mit Wicklungsträger und
- Figur 2:: einen erfindungsgemäßen Wicklungsträger.

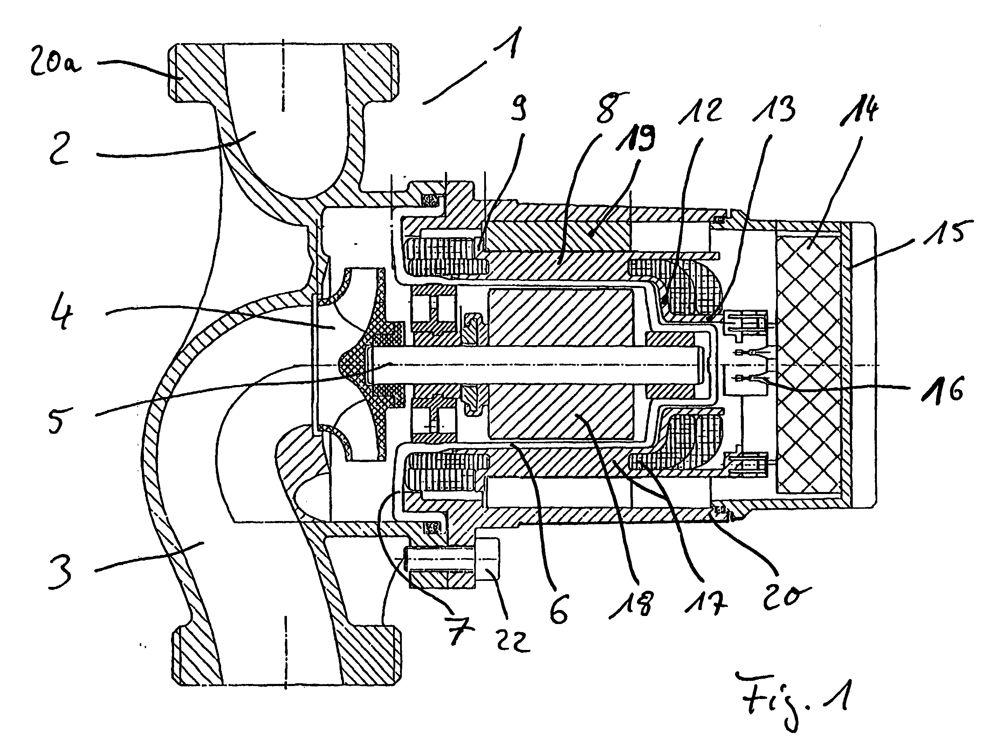

Die Figur 1 zeigt eine Spaltrohrpumpe 1, mit einem Pumpenlaufrad 4, welches das Fördermedium von der Pumpenansaugseite 3 zur Pumpenauslaßseite 2 fördert. Das Pumpenlaufrad 4 ist auf dem Rotor 5 angeordnet, welcher drehbar innerhalb des Spalttopfes 6 gelagert ist. Der Spalttopf 6 trennt den Ständer von der fördermediumsführenden Seite der Spaltrohrpumpe 1. Über dem Spalttopf 6 ist ein Wicklungsträger 8 aufgeschoben, welcher die Ständerwicklung 17 trägt. Der Wicklungsträger 8 hat kragenförmige Befestigungsvorrichtungen 9, welche den Wicklungsträger in Bezug zum Pumpengehäuse arretieren. An der dem Spaltrohr bzw. Spalttopf 6 abgewandten Seite der Ständerwicklung 17 liegt ein zylinderförmiges Ständerblechpaket 19 an. Die Ständerwicklungen sind über Kontakte 16 mit der Pumpenelektronik 14 in elektrisch leitender Verbindung. Die Pumpenelektronik 14 ist in einem Gehäusedeckel 15 angeordnet, welcher abdichtend mit dem zylindrischen Teil 20 des Pumpengehäuses in Verbindung ist.

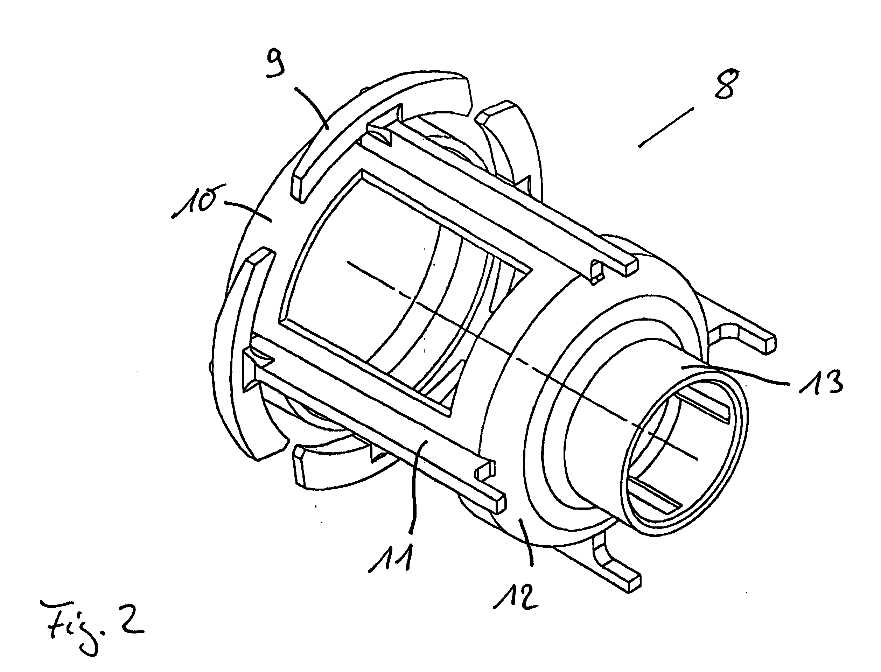

Die Figur 2 zeigt eine perspektivische Darstellung des erfindungsgemäßen Wicklungsträgers 8. Der Wicklungsträger 8 besteht aus einem zylinderförmigen Teil, welches durch zwei Ringelemente 10, 12 und diese miteinander verbindenden Axialverbindungen 11 gebildet wird. Der Innendurchmesser dieses zylinderförmigen Teils entspricht dem Außendurchmesser des zylindrischen Teils des Spalttopfes bzw. Spaltrohres 6, wodurch beim Überschieben des Wicklungsträgers 8 diese beiden Bauteile miteinander in Kontakt sind. An dem ringförmigen Teil 12 des Wicklungsträgers 8 schließt sich ein zylinderförmiges Teil 13 an, welches ebenfalls an dem Spalttopf anliegt bzw. anliegen. An das Teil 13 sind Kontakte befestigbar, welche mit den Kontakten 16 der Motorelektronik 14, wie in Figur 1 dargestellt ist, elektrische Verbindungen realisieren.

Die erfindungsgemäße Spaltrohrpumpe kann unterschiedlich zusammengebaut werden. So ist es zum einen möglich, zuerst den Spalttopf 6 an das die Ansaugseite und Auslaßseite bildende Gehäuseteil 20a zu befestigen und anschließend den Wicklungsträger 8 mit bereits vormontierter Ständerwicklung 17 auf den Spalttopf 6 aufzuschieben. Danach kann das zylinderförmige Gehäuseteil 20 über den Spalttopf und den Wicklungsträger 8 aufgeschoben werden, wobei das Gehäuseteil 20 den Kragen 7 des Spalttopfes 6 abdichtend gegen das Gehäuseteil 20a druckbeaufschlagt, sofern es mit den Schrauben 22 gegen dieses gehalten wird. Anschließend wird das Ständerblechpaket 19 eingeschoben und arretiert. Danach wird die Gehäuseelektronik mittels des Gehäuseteils 15 über die Steckkontakte 16 mit der Ständerwicklung bzw. deren Kontakten verbunden.

Sofern die Ständerseite nicht demontiert werden soll, reicht es aus, lediglich die Befestigungsschrauben 22 zu lösen, wodurch die gesamte Einheit bestehend aus Laufrad 4, Rotor 5, Spalttopf 6 und Wicklungsträger 8 samt Ständerblechpaket 19 und Gehäusedeckel 15 demontiert werden kann. Entsprechend ist es selbstverständlich möglich, den Spalttopf 6 mit dem Wicklungsträger 8 und dem Blechpaket 19 sowie dem Gehäuseteil 20 und dem Gehäusedeckel 15 samt Elektronik 14 vorzumontieren und erst dann die Antriebsseite mit dem Gehäuseteil 20a zu verschrauben.

## Patentansprüche

1. Spaltrohrpumpe (1) mit einem die Pumpe antreibenden Motor, bei dem zwischen Rotor (18) und dem Ständer ein Spalttopf angeordnet ist, wobei ein auf den Spalttopf (6) aufschiebbarer zylindrischer Wicklungsträger die Ständerwicklung trägt, wobei die Ständerwicklung eine Luftspalt- (Airgap) Wicklung ist, wobei der Wicklungsträger den zylindrischen Teil des Spalttopfes zumindest teilweise umfaßt und wobei der Wicklungsträger einteilg aus Kunststoff gefertigt ist,
**dadurch gekennzeichnet,**
- **daß** der Wicklungsträger zwei beabstandete am Spalttopf anliegende Ringelemente aufweist, die über Axialverbindungen miteinander verbunden sind,
- **daß** die Axialverbindungen an dem dem Laufrad zugewandten Ende kragenförmige Befestigungsvorrichtungen (9) aufweisen, die senkrecht an die Axialverbindungen angeformt sind,
- **daß** die Axialverbindungen an dem dem Laufrad abgewandten Ende Finger aufweisen, die in axialer Richtung an die Axialverbindungen angeformt sind, und
- **daß** die Befestigungsvorrichtungen (9) und die Finger die um die Axialverbindungen angeordnete Ständerwicklung halten.

2. Pumpe nach Anspruch 1,
**dadurch gekennzeichnet, daß** die Axialverbindungen von den Ständerwicklungen umwickelt sind.

3. Pumpe nach Anspruch 1 oder 2,
**dadurch gekennzeichnet, daß** der Motor ein elektronisch kommutierter Motor ist, wobei an der dem Spalttopf zugewandten Seite des Rotors gleichmäßig um die Rotorachse angeordnete Permanentmagnete befestigt sind, die zur Drehmomentübertragung vom Stator auf das Pumpenlaufrad dienen.

4. Pumpe nach einem der vorherigen Ansprüche,
**dadurch gekennzeichnet, daß** der Wicklungsträger ein zylinderförmiges Teil aufweist, das am Spalttopf anliegt und an dem Kontakte befestigbar sind, welche mit den Kontakten der Motorelektronik eine elektrische Verbindung realisieren.

5. Pumpe nach einem der vorherigen Ansprüche,
**dadurch gekennzeichnet, daß** der Wicklungsträger aus einem temperaturbeständigen Kunststoff ist.

## Claims

1. Canned motor pump (1) having a motor driving the pump whereby arranged between the rotor (18) and the stator is a spacer can, whereby a cylindrical winding support able to be pushed onto the spacer can (6) bears the stator winding, whereby the stator winding is an air-gap winding, whereby the winding support at least partially surrounds the cylindrical portion of the spacer can and whereby the winding support is made in one piece from a plastics material, **characterised in that** the winding support has two ring elements lying spaced apart on the spacer can, said ring elements being linked to each other via axial connections, that on the end facing towards the impeller, the axial connections have collar-shaped fixing devices (9) that are formed in perpendicular manner onto the axial connections, that the axial connections have fingers on the end facing away from the impeller, said fingers being formed onto the axial connections in the axial direction, and that the fixing devices (9) and the fingers hold the stator winding arranged round the axial connections.

2. Pump according to claim 1, **characterised in that** the axial connections are wound round by the stator windings.

3. Pump according to claim 1 or 2, **characterised in that** the motor is an electronically commutated motor, whereby on the side of the rotor facing towards the spacer can, permanent magnets arranged evenly distributed round the rotor axis are fixed, said permanent magnets serving for torque transmission from the stator to the pump impeller.

4. Pump according to one of the previous claims, **characterised in that** the winding support has a cylindrical portion which lies on the spacer can and to which contacts are attachable which provide an electrical connection with the contacts of the motor electronics.

5. Pump according to one of the previous claims, **characterised in that** the winding support is made from a heat-resistant plastics material.

## Revendications

1. Pompe à tube d'entrefer (1) avec un moteur entraînant la pompe, dans lequel un pot d'entrefer est disposé entre le rotor (18) et le stator, un support de bobinage cylindrique coulissant sur le pot d'entrefer (6) portant le bobinage statorique, le bobinage statorique étant un bobinage à entrefer (airgap), le support de bobinage entourant au moins partiellement la partie cylindrique du pot d'entrefer et le support de bobinage étant fabriqué d'une seule pièce en matière synthétique,
**caractérisée par le fait**
- **que** le support de bobinage présente deux éléments annulaires écartés adjacents au pot d'entrefer qui sont reliés l'un à l'autre par l'intermédiaire de liaisons axiales,
- **que** les liaisons axiales présentent à l'extrémité tournée vers la roue mobile des dispositifs de fixation (9) en forme de collerette qui sont conformés orthogonalement sur les liaisons axiales,
- **que** les liaisons axiales présentent à l'extrémité écartée de la roue mobile des doigts qui sont conformés en direction axiale sur les liaisons axiales et
- **que** les dispositifs de fixation (9) et les doigts supportent le bobinage statorique disposé autour des liaisons axiales.

2. Pompe selon la revendication 1,
**caractérisée par le fait que** les liaisons axiales sont enveloppées par les bobinages statoriques.

3. Pompe selon la revendication 1 ou 2,
**caractérisée par le fait que** le moteur est un moteur commuté électroniquement, des aimants permanents disposés régulièrement autour de l'axe du rotor étant fixés sur la face du rotor tournée vers le pot d'entrefer, qui servent à la transmission du couple de rotation du stator à la roue mobile de pompe.

4. Pompe selon l'une des revendications précédentes,
**caractérisée par le fait que** le support de bobinage présente une partie cylindrique qui est adjacente au pot d'entrefer et sur laquelle peuvent être fixés des contacts qui réalisent une liaison électrique avec les contacts de l'électronique du moteur.

5. Pompe selon l'une des revendications précédentes,
**caractérisée par le fait que** le support de bobinage est en une matière synthétique à constance thermique.
